Europäisches Patentamt

(19) European Patent Office

Office européen des brevets

(11) Publication number: **0 027 387**
**A2**

(12) **EUROPEAN PATENT APPLICATION**

(21) Application number: **80303641.7**

(22) Date of filing: **15.10.80**

(51) Int. Cl.³: **G 03 B 17/52**
**G 03 B 17/32**

(30) Priority: **15.10.79 US 84474**

(43) Date of publication of application:
**22.04.81 Bulletin 81/16**

(84) Designated Contracting States:
**BE DE FR GB NL**

(71) Applicant: **EASTMAN KODAK COMPANY**
**343 State Street**
**Rochester, New York 14650(US)**

(72) Inventor: **Sylvester, Robert A.**
**Kodak Park**
**Rochester, New York(US)**

(74) Representative: **Trangmar, Leigh Alan et al,**
**KODAK LIMITED P.O. Box 114 246 High Holborn**
**London WC1V 7EA(GB)**

(54) **Photographic film pack.**

㉗ A photographic film pack 11, which includes a stack of film units 13 received in a housing 15, has a slide 17 permanently coupled to the housing for reciprocal movement between an initial position forming part of the stack and a second position removed from the stack. Initially, the slide serves as a dark slide to shield the film units from fogging through an exposure aperture in the housing. When reciprocated, however, such as in a processing camera, the slide is guided to enter the stack to a third position behind the forwardmost film unit, and to remove that unit from the housing through an exit slot upon subsequent movement back to the second position. The slide can also support the forwardmost film unit in the exposure position, shield other than the forwardmost unit from exposure if the film units are transparent, and assist in controlling processing of the film units.

FIG.1.

PHOTOGRAPHIC FILM PACK

This invention relates to photographic film packs, which include a plurality of film units in a cartridge housing.

U.S. Patent Specification No. 424,857 discloses a photographic film pack including a housing having an exposure aperture for exposing the forwardmost film unit of a stack of film units in the housing. The pack also includes a dark slide which is movable in a first direction from an initial position in which it is between the forwardmost film unit and the exposure aperture. In the initial position, the dark slide prevents undesired exposure of the forwardmost film unit by actinic radiation passing through the exposure aperture. The dark slide is movable in the first direction from its initial position to a second position. In the second position, the dark slide allows exposure of the forwardmost film unit through the exposure aperture.

Such a film pack has the disadvantage that, when the pack is in a condition for taking a photograph, the dark slide is in its second position projecting from the film pack. It is undesirable to have the dark slide projecting out of the camera, in which the film pack is loaded, when the camera is in a condition for taking a photograph.

It is the object of the present invention to provide a film pack which overcomes this undesirable aspect of the known film pack.

According to the present invention, there is provided a photographic film pack including the housing having an exposure aperture for exposing the forwardmost film unit of a stack of film units combined therein, and a dark slide movable in a first direction from an initial position in which it is between the forwardmost film unit and the exposure aperture to a second position in which it allows exposure of the forwardmost film unit through the exposure aperture, characterized in that, when in the second position, the dark slide is movable in a second direction opposite to the first direction to a third position in which it is located between the forwardmost film unit and the next adjacent film unit in the stack, and in that the dark slide has means for engaging the forwardmost film unit to move the forwardmost film unit therewith as the dark slide is moved in the first direction from the third position to the second position.

Very little of the dark slide projects from the housing when the pack is in condition for taking a picture and, additionally, there are the following advantages. The dark slide is used throughout the life of the pack and so does not become waste at the time of preparing to take the first picture. Thus, there is no problem of disposal and the likelihood of creation of litter is reduced. The dark slide, in its third position, is between the forwardmost and the next film units so that fogging of the next film unit by light passing through a translucent forwardmost film unit is eliminated. When in its third position, the dark slide may act as a support for the forwardmost film unit so that the forwardmost film unit is flat and in the focal plane during exposure. The pack allows total elimination or at least simplification of mechanical devices for picking an exposed film unit from the front of the stack.

Preferably, when the dark slide is in its initial and third positions, and end portion of the dark slide projects through an exit slot of the housing sufficiently to enable the slide to be moved between its positions. For example, the projecting end portion can be gripped by the fingers of a camera user.

Advantageously, the housing has guide means for guiding sliding movement of the dark slide between its initial, second and third positions. The guide means supports the dark slide in spaced relation to the exposure aperture whereby, when the dark slide is in its third position, the forwardmost film unit is between the dark slide and the exposure aperture.

In a pack in which there is a spring biasing the stack of film units toward the exposure aperture, the dark slide by being mounted in guides can relieve the film unit in the exposure position from the effects of the spring and other film units.

Embodiments of the present invention will now be described, by way of example, with reference to the accompanying drawings, in which:

Fig. 1 is an exploded view of a first embodiment of a film pack according to the present invention;

Fig. 2 is a perspective view, with parts cut away, of the film pack depicted in Fig. 1;

Fig. 3 is a side view partially cut away of a camera wherein is shown the film pack of Fig. 1;

Figs. 4-9 are sectional schematic views depicting the operation of a slide plate of the film pack sequentially moving a first film unit from the pack;

Fig. 10 is a partial perspective view of a second embodiment of a film pack according to the invention;

Fig. 11 is a slide view of a third embodiment of a film pack in accordance with the present invention;

Fig. 12 is a partial sectional view of the pack of Fig. 11;

Fig. 13 is a perspective view of a dark slide of the film pack of Fig. 11;

Fig. 14 is a schematic perspective view of the pack of Fig. 11 in a camera;

Fig. 15 is a perspective view of a fourth embodiment of a film pack according to the present invention;

Fig. 16 is a diagrammatic perspective view with parts cut away of the film pack of Fig. 15;

Fig. 17 is a perspective view of one of the film units of the film pack of Fig. 15; and

Fig. 18 is a perspective view of a camera adapted for use with the film pack of Fig. 15.

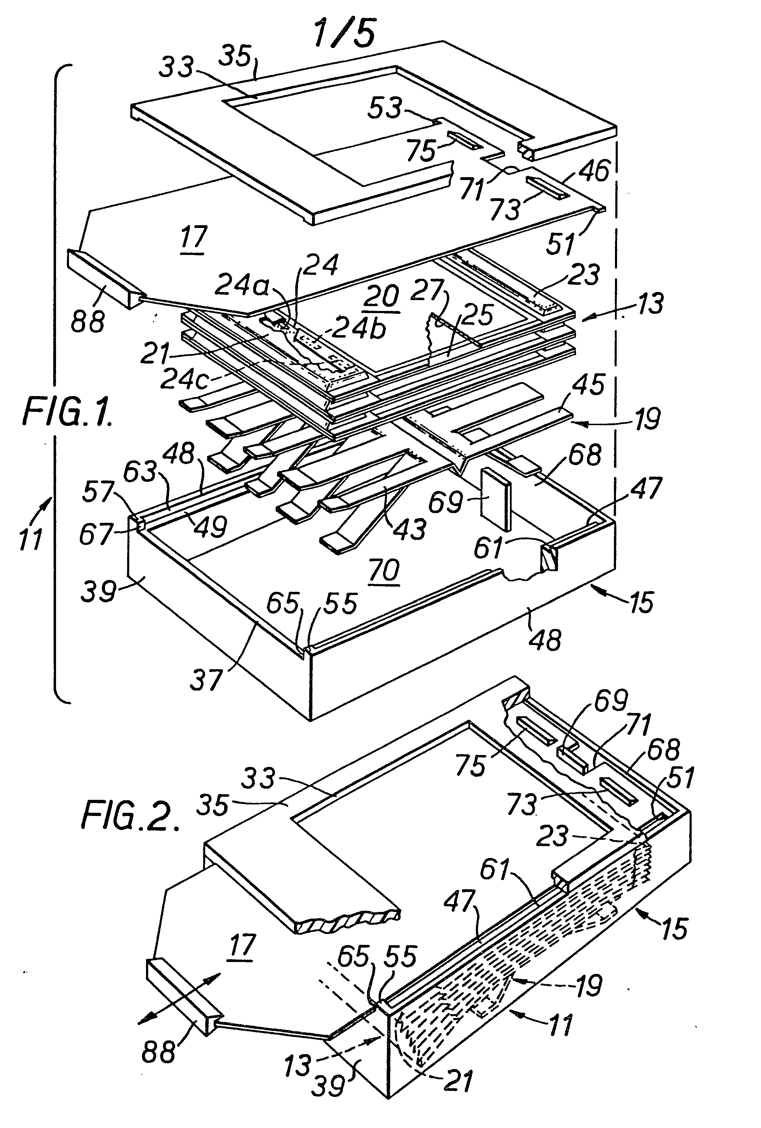

A first embodiment of a film pack according to the invention is depicted in Figs. 1-9. Referring firstly to Figs. 1 and 2, a film pack 11 includes a stack of film units 13 received in a cartridge housing 15 between a dark slide 17 and a spring assembly 19. As will become more apparent from the following description, the film units are sequentially exposed in and removed from the forwardmost position in the housing. The spring assembly advances the next successive film unit into the position vacated by the removed unit.

The film units 13 are of a conventional self-processing type. Each unit includes an image-recording area 20, a rupturable pod 21, and a trap 23. Such units are adapted for use in processing cameras that distribute a liquid processing composition from the pod 21 across the image-recording area 20. The pod 21 is compressed by a camera mechanism which ruptures a burst seal 24 of the pod, releasing the liquid composition, under the control of permanent seals 24a, 24b and 24c. Any excess, after the composition has been distributed, is collected and neutralised in the trap 23.

The image-recording area 20 comprises a photosensitive sheet 25 which carries a plurality of layers including photosensitive, dye image-providing and dyeable materials. Exposure of the forwardmost film unit 13 to a scene establishes a latent image in the photosensitive layers. That image is then developed by the processing composition to effect migration of an imagewise distribution of the dyes to the dyeable layers.

A cover sheet 27 is employed to confine the processing composition to the intended area. In one commercially available unit, for example, the cover sheet 27 is transparent and is permanently attached to the photosensitive sheet 25 along its edges. The photosensitive layers are adapted to be exposed through the cover sheet 27, and the dyeable, image-receiving layer is viewable at the face of the film unit 13 which is opposite the cover sheet.

The cartridge housing 15 comprises a light-tight, generally rectangular casing including an exposure aperture 33 in its forward wall 35 and an exit slot 37 in one end wall 39. The aperture 33 approximates the size of the image-recording area 20 of the film unit 13 to permit exposure of the unit through the forward wall 35. The exit slot 37 allows the removal of the individual film units 13 from the cartridge housing after exposure. The spring assembly 19 assists in this process by resiliently urging the film units 13 toward the forward wall 35. Thus, as each film unit 13 is exposed through the aperture 33 and removed through the exit slot 37, the next successive film unit 13 is advanced into the exposure position. Although the forwardmost film unit 13 is substantially flat, the other units may have substantial longitudinal curvature, due to the greater thickness of the pod 21 and traps 23, compared to the image-recording area 20. Flexible, finger-like areas 43 and 45 of that portion of the spring assembly 19 which bear against the rear of the stack of film units 13 are designed to accommodate this splaying of the ends of the slack.

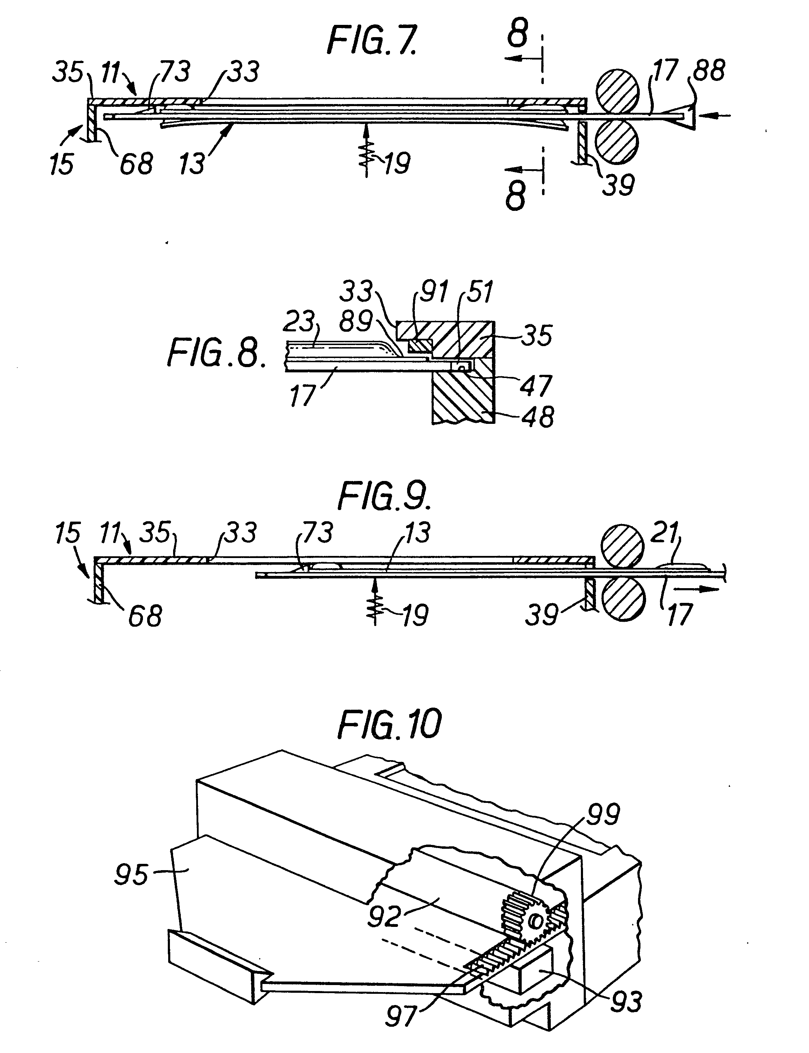

The dark slide 17 is coupled to the cartridge housing 15 for reciprocation between a first position in the housing 15, as illustrated in Figs. 1, 2 and 4, and a second position removed from the stack in the direction of the exit slot 37. Initially, in its first position, and as depicted most clearly in Figs. 1, 2 and 4, the dark slide 17 is located between the film units and the forward wall 35 and completely covers the exposure aperture 33. There it serves as a conventional dark slide for shielding the film units from premature exposure which might otherwise have been caused by actinic radiation passing through the exposure aperture 33. When reciprocated a first time, however, to the second position (Fig. 5) and back in the opposite direction to the third position (Fig. 7), the dark slide uncovers the aperture 33 and enters the stack behind the forwardmost film unit 13. Each subsequent reciprocation of the dark slide 17 removes that film unit which is then forwardmost in the stack, and reinserts the dark slide behind the next successive film unit. After each film unit has been exposed, it is removed from the housing 15 through the exit slot 37 and the next film unit is advanced into the exposure position by a reciprocation of the dark slide 17.

Referring again to Figs. 1 and 2, the dark slide 17 is mounted in the housing 15 for longitudinal sliding movement between its first, second and third positions.  Opposed rebates 47 and 49, located in the side walls 48 of the housing 15 receive the lateral edges of the dark slide 17 and guide its movement.

Opposed tabs 51 and 53 project outwardly from the slide 17 adjacent that end 46 thereof which is furthest from the exit slot 37 when the slide 17 is in its first position (Fig. 1).  The tabs 51, 53 serve to prevent the slide 17 being totally withdrawn from the housing 15.  The tabs are captured in the grooves, 47 and 49, but are wider than the space between abutments 55 and 57, at the ends of the exit slot 37, to prevent the slide moving totally through the slot.  The lateral position of the slide is determined by the vertical surfaces 61 and 63 of the rebates 47 and 49, which engage the tabs 51 and 53, and by the vertical surfaces 65 and 67 of the abutments 55 and 57, which engage the lateral edges of the slide 17.

The end 46 of the slide 17 extends beyond the ends of the film units when in the first position. The film units 13 are held away from end wall 68 by a finger 69 that extends forwardly from the back wall 70 of the housing 15.  The slide 17 includes a cut-out 71 to accommodate movement of the end 46 of the slide 17 beyond the finger 69.  Also adjacent the end 46 of the slide 17 are film picking elements 73 and 75 which are positioned to engage the adjacent end of the forwardmost film unit when the slide 17 is in its third position.

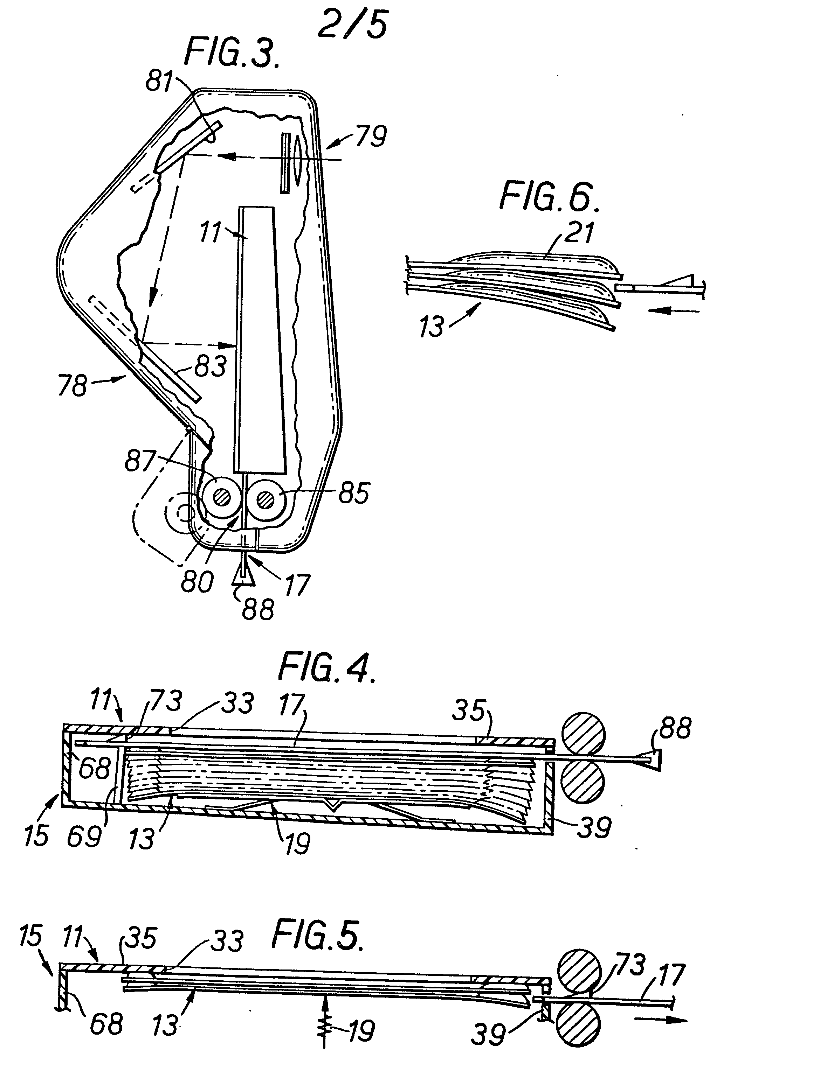

The operation of the film pack 11 and its slide 17 is depicted more clearly in Figs. 3-9. In Fig. 3 the pack 11 is depicted in a processing camera 78 having exposure and processing mechanisms 79 and 80 respectively. The exposure mechanism 79 includes two mirrors 81 and 83 to fold the optical path so that the camera is more compact. The processing mechanism 80 has first and second pressure members, in the form of rollers 85 and 87, which are mounted so as to be separable for loading a pack into the camera. Once loaded, the leading end 88 of the slide 17 extends from the cartridge housing 15 and between the rollers 85, 87 to a position in which it is accessible at the exterior of the camera.

The pack 11 is prepared for exposure of the first film unit 13 by reciprocating the slide 17 from the first position (Fig. 4) to the second position (Figs. 5 and 6) and back to the third position (Fig. 7). During such movement, the slide 17 is completely removed from overlying relationship with the stack. As this removal occurs, the forwardmost film unit 13 is advanced by the spring 19 into the exposure position in engagement with the forward wall 35 of the housing 15. The slide 17 is inserted into the stack behind the forwardmost film unit 13. As depicted in Fig. 6, this operation is facilitated by the above-mentioned splaying apart of the film units at the leading end of the stack and by the additional thickness of the chemical pods which separate the leading end edges of the film units 13.

The slide 17 is mounted to reciprocate in a plane that is spaced sufficiently from the forward wall 35 of the cartridge housing 15 to accommodate one, and only one, of the film units. Thus, when the slide 17 is moved to return to its third position, it will enter the film unit stack between the first two film units 13.

Referring now to Figs. 7 and 8, it will be seen that the wall 35 (the roof of the housing) is thicker peripherally than over the majority of its area. This spaces the roof of the housing away from the dark slide 17 and the slide 17 then supports the forwardmost film unit 13 in the exposure position behind the aperture 33 by capturing the lateral edges 89 of the film unit between cartridge rails 91 and the slide 17. At the same time, the dark slide is itself held by its edges and isolates the forwardmost film unit from the remainder of the stack and from the spring assembly. In such an embodiment, it will be appreciated that the first and third positions of the dark slide are coincident relative to the cartridge housing.

The removal of the forwardmost film unit is depicted in Fig. 9. When the slide 17 is moved from its third position to its second position, the film picking elements 73 and 75 engage the trailing end of the forwardmost film unit and push it, with the slide 17, through the exit slot 37 and the camera's processing mechanism 80. In addition to this transporting function, however, it should be noted that the slide plate 17 facilitates proper gating of the film units at the exit slot 37. The height of the upper edge of the exit slot 37, defined by the thinner part of the roof of the housing, can be made significantly greater than the greatest thickness of a film unit 13, so the slot 37 will not unduly restrict the removal of the film unit, while the location of the slide 17 defined by its captured edges can be chosen to engage the other edge of the slot i.e. the edge which is furthest from the forward wall 35, in order to prevent another film unit in the stack being withdrawn by friction, with the forwardmost unit.

It should also be noted that the slide 17 can be used to facilitate or modify the processing of the film units 13. For example, the face of the slide 17 which is away from the forwardmost film unit may include lubricants to reduce friction, or the face which engages the forwardmost unit may be configured to control the separation of the pressure rollers, and thereby the distribution of the processing composition. Wedges may be provided on the slide 17 adjacent the trailing end of the forwardmost film unit instead of the spacers that are usually incorporated in the traps of film units to cause parting of the rollers when the trap passes through them.

As the slide 17 moves to its second position, the film engaging members 73 and 75 move through the camera pressure members before the tabs 51 and 53 catch against abutments 55 and 57. The transported film unit is retrieved by simply removing it from the slide. The slide 17 is returned towards its third position, whereupon it is again guided behind the forwardmost film unit. This process is repeated after exposure of each film unit, until the pack is exhausted.

A second embodiment of the present invention, with motorized operation, is depicted in Fig. 10. In this embodiment, pressure members 92 and 93 are provided in the film pack instead of in the camera. The dark slide 95 includes a rack 97, along one or both of its lateral margins. One of the pressure members, for example 92, includes one or more pinion gears 99 rotatably mounted to engage the rack or racks 97 on the slide 95. Alternate rotations of the pinion gear 99, first in one direction and then the other, will automatically reciprocate the slide 95 between its first, second and third positions. Although the corresponding camera structure is not depicted, it should be understood that a reversible motor and drive mechanism can be used to rotate the pinion gear. Should the drive mechanism fail, the slide 95 can still be grasped manually to withdraw an exposed film unit in the manner described in relation to the first embodiment.

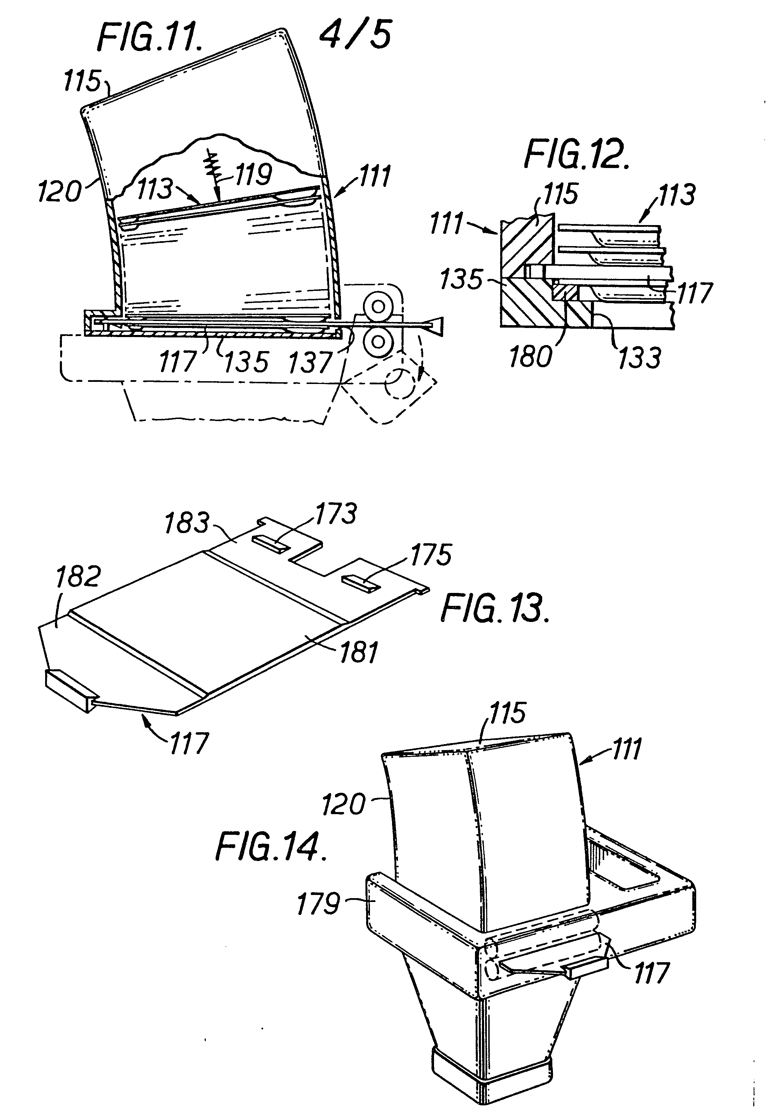

A third embodiment of a film pack according to the invention is depicted in Figs. 11-14. Like the first embodiment, the film pack 111 includes a stack of film units 113 received in a cartridge housing 115 between a slide 117 and a spring assembly 119. Compared to the preferred embodiment described above, the cartridge housing is larger and is adapted to receive a greater number of film units.

The forward portion of cartridge housing, which is adapted to mate with a processing camera, can be constructed from essentially the same cartridge housing parts that were used in the first embodiment. The back wall of the cartridge provides for an extended arcuate housing portion 120 accommodating the additional film units. The shape of the portion 120 preferably conforms approximately to the shape of an unconfined stack of the film units with the processing composition pods all arranged at one end.

It has been found in a film pack of this size that conventional spring assemblies may not provide sufficient force to hold the forwardmost film unit in a correct position for exposure. In this embodiment, the slide 117 can serve this purpose as well as that of transporting the individual film units from the pack. The spring assembly 119 is then required only to provide sufficient force to advance the stack of film units toward the exposure aperture 133 (Fig. 12) in the forward wall 135 as each successive film unit is removed from the stack through exit slot 137.

In operation, the pack is loaded into a processing camera back 179 (Fig. 14) and the slide is moved once, in a first direction, from its first position to the second position and then in the opposite direction back to the third position. This removes the slide from its initial position in front of the stack, where it serves as a conventional dark slide, and inserts the slide behind the forwardmost film unit. In this position, depicted in Figs. 11 and 12, the slide 117 supports the forwardmost unit 113 against the forward wall 135, which establishes the film plane. At the same time, the slide 117 isolates the forwardmost unit 113 from forces that otherwise might be transmitted through the other film units in the stack.

Referring most specifically to Fig. 12, and remembering the configuration of the film units from the description relating to Fig. 1, it will be seen that the forwardmost film unit is accurately located by capturing its lateral margins, which are essentially flat, between the slide 117 and cartridge housing side rails 180.

As in the first embodiment, subsequent reciprocations of the slide 117 will transport the successive film units, after exposure, through the cartridge exit slots and the camera's processing mechanism. The pickers 173 and 175 engage the trailing end of the forwardmost film unit and transport it with the slide as the latter moves towards its second position.  Upon its return to the third position, the slide plate is guided between the first two film units.

In connection with this film locating feature, it may be desirable to shape the slide plate, as depicted in Fig. 13, with a central section 181 that is slightly thicker than the end portions 182 and 183 which support the pod and trap of the film unit. The end portions permit some bending of the pod and trap away from the forward wall 135 to enhance engagement between the image-recording portion of the film unit and film locating structure in the forward wall. Of course, other suitable shapes undoubtedly will now be apparent to those skilled in the art who are faced with the problems of locating film units for exposure.

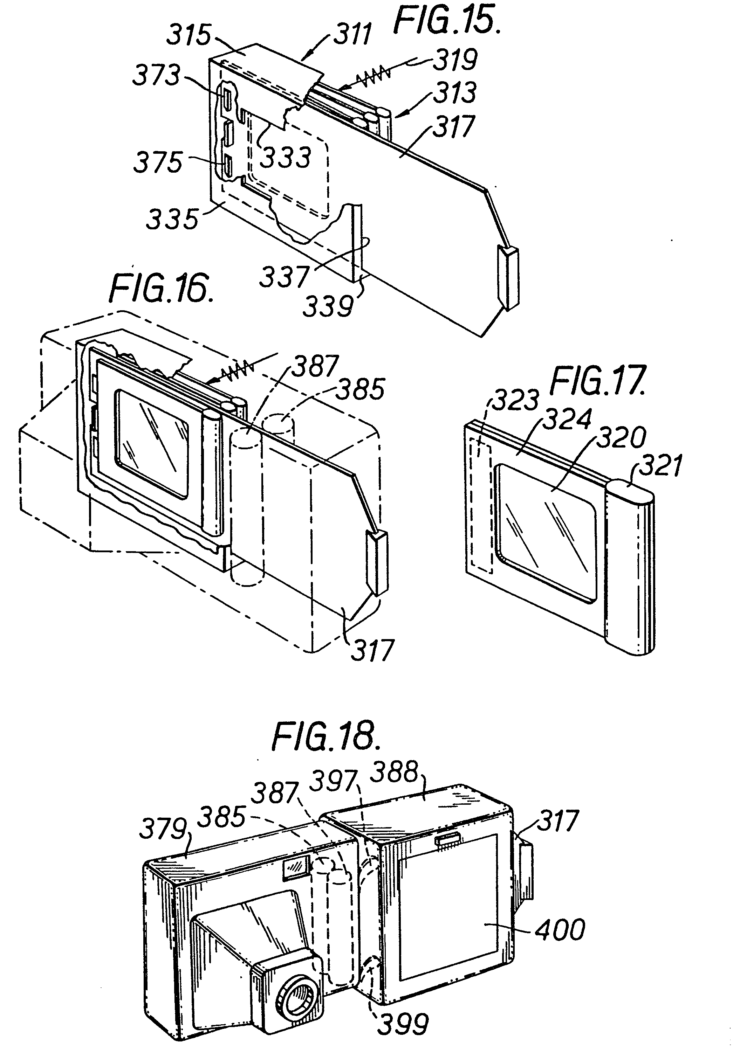

A fourth embodiment of the invention is depicted in Figs. 15-18.  The film pack 311 includes a stack of film units 313 received in a cartridge housing 315 between a slide 317 and a spring assembly 319.

In this embodiment, the film units are self-processing transparencies which include an image-recording area 320 (Fig. 17), a rupturable chemical pod 321 and a trap 323, all mounted in a somewhat stiff plastic or cardboard frame 324.

The cartridge housing 315 comprises a light-tight, generally rectangular casing including an exposure aperture 333 in its forward wall 335 and an exit slot 337 in end wall 339.  As described in connection with the first embodiment, each film unit is exposed through the aperture and removed by the slide 317 through the exit slot.  The next successive film unit is then advanced into the exposure position and the process is repeated until the pack is exhausted of film units.

The film units of this embodiment do not include opaque layers which would permit the units to be processed in daylight. Accordingly light forming a latent image in the forwardmost film unit in the stack will simultaneously expose the subsequent film units, unless precautionary measures are taken.

Referring now to the operation of this embodiment, the pack is loaded into a processing camera 379 including first and second pressure members 385 and 387 and a dark chamber 388. The leading end of the slide 317 is long enough in this embodiment to extend through the pressure members 385, 387 and the dark chamber to a position accessible from the exterior of the camera.

As in the first embodiment, the slide serves initially as a dark slide (Fig. 15) and the pack is prepared for exposing the first film unit by reciprocating the slide from the initial location into position in the stack behind the forwardmost film unit (Fig. 16). In this third position, the dark slide shields the subsequent film units from simultaneous exposure with the forwardmost unit.

Subsequent reciprocations of the slide 317 will transport the film units 313 sequentially from the cartridge housing 315, through the processing mechanism 385, 387 and into the dark chamber 388. When the slide 317 is moved to its second position picking elements 373 and 375 engage the trailing end of the forwardmost film unit and transport it with the dark slide 317. When the slide is returned to its third position, it is guided between the first two film units then in the stack. In this embodiment, it is desirable automatically to strip the exposed film units from the slide, and to stack the units in the dark chamber where processing continues.

As depicted in Fig. 18, stripping fingers 397 and 399 are resiliently urged toward the slide plate 317, first to ride on the laterial edges of the film unit, as it is drawn into the dark chamber on movement of the slide to the second position, and then to catch under and remove the film unit when the slide is returned to its third position. An access door 400 is provided for access to the film units after processing.

It should now be apparent from the foregoing description that the dark slide is a movable member which provides a simple and inexpensive mechanism for sequentially transporting a plurality of film units from a cartridge housing. In addition to providing the propulsive force to move the film units, the slide is used to assist in gating the respective film units through the exit slot so that only one film unit at a time will move through the slot even though the height of the slot may be significantly greater than the thickness of one film unit.

When used in a processing camera, the slide can facilitate movement of the film units through the processing mechanism, such as by presenting a surface of optimum shape and frictional characteristics to at least one of the pressure members. Although not depicted in the present description, those skilled in the art will recognize that the slide plate could be shaped or provided with side rails, trap spacers, or other features to enhance the fluid spreading characteristics of the mechanism, eliminating the need for such elements that are provided in the present commercial film units.

The slide serves as a dark slide to prevent fogging of the film units prior to use, and, when used with transparencies or other translucent film units, it can shield subsequent film units from simultaneous exposure with the forwardmost film unit. Similarly, the slide can provide additional light protection to one side of the film unit during processing.

Still further, the slide assists in supporting the forwardmost film unit in the desired exposure position relative to the cartridge housing, while isolating such unit from distoring forces contributed by the pressure plate or other film units in the pack.

CLAIMS

1.      A photographic film pack including the housing having an exposure aperture for exposing the forwardmost film unit of a stack of film units combined therein, and a dark slide movable in a first direction from an initial position in which it is between the forwardmost film unit and the exposure aperture to a second position in which it allows exposure of the forwardmost film unit through the exposure aperture, characterized in that, when in the second position, the dark slide is movable in a second direction opposite to the first direction to a third position in which it is located between the forwardmost film unit and the next adjacent film unit in the stack, and in that the dark slide has means for engaging the forwardmost film unit to move the forwardmost film unit therewith as the dark slide is moved in the first direction from the third position to the second position.

2.      A film pack according to Claim 1, characterized in that an end portion of the dark slide projects through an exit slot of the housing when the dark slide is in its initial and third positions to facilitate movement of the slide between its positions.

3.      A film pack according to Claim 1 or 2, characterized in that the housing has guide means for guiding sliding movement of the dark slide between its initial, second and third positions, and that said guide means support the dark slide in spaced relation with the exposure aperture.

4.      A film pack according to Claim 1, 2 or 3, including a spring biasing the stack towards the exposure aperture, characterized in that the dark slide,

-18-

when in its third position, isolates the forwardmost
film unit from the action of the spring.

FIG.1.

FIG.2.

FIG.3.

81
79
11
78
83
87
80
88
17
85

FIG.6.
21
13

FIG.4.
11   73   33   17        35         88
68
15   69   13        19              39

FIG.5.
15  11   35   33
68   13        19        39   73  17

FIG.7.

FIG.8.

FIG.9.

FIG.10

FIG.11.

115
120
113 119 111

117 135 137

FIG.12.

111
115
113
135
180 133 117

FIG.13.

183 173
182
175
181
117

FIG.14.

115
120 111
179
117

FIG.15.

FIG.16.

FIG.17.

FIG.18.